# EUROPÄISCHE PATENTSCHRIFT

(11) **EP 3 709 106 B1**
(45) Veröffentlichungstag und Bekanntmachung des Hinweises auf die Patenterteilung: **06.01.2021**
(21) Anmeldenummer: 19161892.5
(22) Anmeldetag: 11.03.2019
(51) Int. Cl.: G05B 9/03, G05B 19/4061, B25J 9/16, F16P 3/14

(54) **ABSICHERN EINER MASCHINE**
SECURING OF A MACHINE
MISE EN SÉCURITÉ D'UNE MACHINE

(43) Veröffentlichungstag der Anmeldung: 16.09.2020
(73) Patentinhaber: SICK AG, 79183 Waldkirch (DE)
(72) Erfinder: HAMMES, Markus, 79117 Freiburg (DE); HOFMANN, Christoph, 71984 Waldkirch (DE)

(56) Entgegenhaltungen:
- WO-A1-2010/094466
- DE-A1-102006 048 146
- DE-B3-102010 007 520
- N N: "User's Manual Safety Laser Scanner OS32C Series", , 1. Januar 2015 (2015-01-01), Seiten i-xx,1-157, XP055616257, Gefunden im Internet: URL:https://assets.omron.eu/downloads/manu al/en/v1/z296_os32c_users_manual_en.pdf [gefunden am 2019-08-28]

## Beschreibung

Die Erfindung betrifft ein Sicherheitssystem und ein Verfahren zum Absichern einer Maschine nach dem Oberbegriff von Anspruch 1 beziehungsweise 14.

Ein gattungsgemäßes Sicherheitssystem nutzt einen oder mehrere Sensoren, um die Umgebung einer Maschine zu überwachen und sie bei drohender Gefahr rechtzeitig in einen sicheren Zustand zu versetzen. Ein häufig hierfür eingesetzter Sensor ist ein Laserscanner. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Auch die dritte Raumkoordinate kann durch eine Relativbewegung in Querrichtung noch erfasst werden, beispielsweise durch einen weiteren Bewegungsfreiheitsgrad der Ablenkeinheit in dem Laserscanner oder indem das Objekt relativ zu dem Laserscanner bewegt wird.

In sicherheitstechnischer Anwendung zur Absicherung einer Maschine überwacht der Laserscanner ein Schutzfeld, das während des Betriebs der Maschine vom Bedienpersonal nicht betreten werden darf. Erkennt der Sensor einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Die genaue Positionsinformation in zweidimensionalen Polarkoordinaten ist nur intern im Sicherheitslaserscanner verfügbar, und bisher gibt es keine Geräte, welche diese Informationen auf sichere Weise nach außen weitergeben. Sicher ausgegeben wird nur die Information, ob ein Schutzfeld verletzt ist, und dieses Schutzfeld ist in bekannten Laserscannern frei konfigurierbar. Schutzfelder können auch umgeschaltet werden, und seit einiger Zeit gibt es Laserscanner, die mehrere Schutzfelder simultan auswerten und dabei angeben, welches der Schutzfelder verletzt wurde.

Die Schutzfeldauswertung eines Laserscanners ist ein typisches Beispiel für eine Diskrepanz des Informationsgehalts zwischen der erfassten Sensorinformation und der sicheren Ausgabegröße. Intern wird eine Fülle hochwertiger Sensorinformationen erfasst, im Beispiel des Laserscanners die Kontur aller abgetasteten Objekte, bei anderen Sensoren können es zwei- oder dreidimensionale Bilddaten oder andere Sensordaten sein. Diese Sensorinformationen werden aber bereits im Sensor gefiltert und nach sicherheitstechnischen Vorschriften stark verdichtet, meist bis hin zu einem nur noch binären Schaltsignal für eine Maschinensteuerung, welches die Maschine erforderlichenfalls in den sicheren Zustand versetzt. Das binäre Schaltsignal ist sicher, enthält aber fast nichts mehr von der anfänglichen Sensorinformation. So lassen sich vorwiegend einfache Sicherheitsfunktionen realisieren, wie das Ausgangsbeispiel der Überwachung von konfigurierten Schutzfeldern.

Die nicht verdichteten Sensordaten mit hohem Informationsgehalt dagegen werden nicht oder nur über nicht sichere Datenschnittstellen weitergegeben, um damit zusätzliche Automatisierungsfunktionen umzusetzen. Damit sind keine Sicherheitsanwendungen möglich, da schon die Übergabe der Sensordaten und auch die nachfolgende Auswertung den genannten Anforderungen der Sicherheitsnormen nicht genügen.

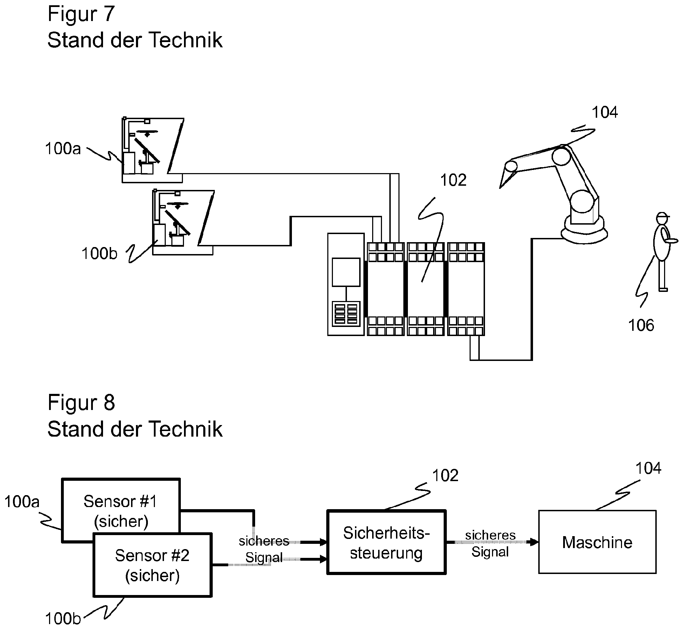

Das herkömmliche Sicherheitskonzept ist in Figur 7 mit konkreten Hardwarekomponenten und in Figur 8 abstrakt als Blockdarstellung gezeigt. Sichere Sensoren 100a-b, in diesem Beispiel Sicherheitslaserscanner, werden an eine Sicherheitssteuerung 102 angeschlossen. Dort werden die sicheren Schaltsignale der Sicherheitslaserscanner 100a-b verknüpft. Bei Gefährdung einer Person 106 in der Umgebung der überwachten Maschine 104, hier ein Industrieroboter, wird ein Absicherungssignal an die Maschine 104 ausgegeben, um die Maschine 104 rechtzeitig in einen sicheren Zustand zu überführen.

Dabei werden durchgängig Sicherheitskomponenten verwendet, also sichere Sensoren 100a-b, eine Sicherheitssteuerung 102 und sichere Signalwege. Um sicher zu sein, sind überall dort separat Fehlerbeherrschungsmaßnahmen implementiert, damit mögliche sicherheitskritische Fehler entlang der Signalkette vermieden oder kontrolliert werden.

Dieses Vorgehen schränkt die Flexibilität bei der Umsetzung komplexer Sicherheitsfunktionen erheblich ein. Dafür lassen sich drei wichtige Gründe ausmachen: Es fehlen Datenschnittstellen, die sicherheitstechnisch verwendbar sind und ausreichend hohen Datentransfer erlauben. Ansonsten könnte beispielsweise ein Sicherheitslaserscanner auch seine Scandaten und nicht nur ein binäres Signal bei Schutzfeldverletzung sicher ausgeben. Weiter fehlen performante Sicherheitssteuerungen, mit denen komplexe Algorithmen auf großen Datenmengen mit akzeptabler Geschwindigkeit ausgeführt werden können. Damit wären nicht länger nur einfache Verknüpfungen von binären Sicherheitssignalen möglich. Schließlich fehlen sichere Softwarefunktionsblöcke, die anwendungsbezogen auf einer Steuerung ausgeführt werden können und eine schrittweise Erweiterung des Funktionsumfangs von Sicherheitsfunktionen im Feld erlauben würden.

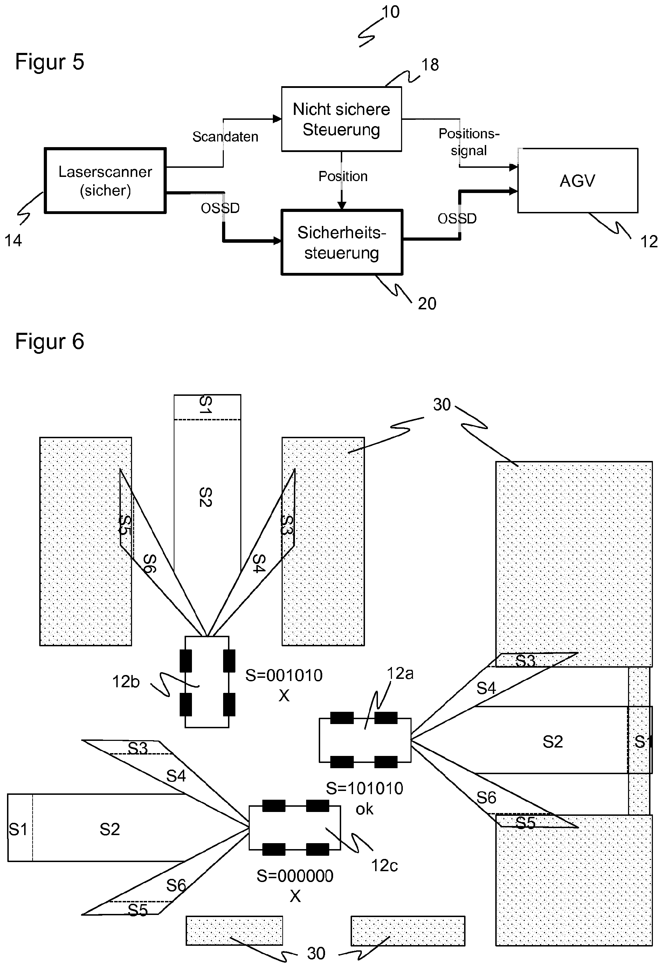

Die EP 2 395 372 B1 offenbart eine Anordnung mehrerer Sicherheitslaserscanner, die gemeinsam an eine Sicherheitssteuerung angeschlossen sind. Zusätzlich zu den Schutzfeldern werden Automatisierungsfelder überwacht, wobei bestimmte Eingriffe in Automatisierungsfelder eine Umschaltung der Schutzfeldkonfiguration auslösen. Die sicherheitsrelevante Kommunikation der Sicherheitslaserscanner beschränkt sich folglich weiterhin auf binäre Schutzfeldverletzungen, so dass dies ein Beispiel für die zu Figur 6 und 7 erläuterte herkömmliche Herangehensweise ist.

In der EP 2 825 812 B1 wird eine Absicherung eines gefährlichen Arbeitsbereichs einer Maschine mittels einer Stereokamera beschrieben. In einem Schutzfeld um die Maschine werden Objekte mit einem sicheren Fremdobjektdetektor erfasst. Außerdem werden die Bilddaten benutzt, um Personen in einem Klassifikator als solche zu erkennen und dann zu verfolgen. Die Personenverfolgung selbst ist nicht sicher implementiert. Es wird stattdessen geprüft, ob die von der Personenverfolgung ermittelte Position mit diejenigen des Fremdobjektdetektors übereinstimmt, und falls nicht, wird ein NotHalt aktiviert. Nun ist aber bei den im Markt verfügbaren Sicherheitssensoren einschließlich Sicherheitslaserscannern wie oben beschrieben gerade nicht möglich, die Positionsinformation sicher auszugeben, sondern es werden nur Schutzfeldverletzungen binär bereitgestellt. Ein derartiger Vergleich von Positionsinformationen ist deshalb in der Praxis unmöglich, außer es wird ganz dediziert unter ungeheurem Aufwand eine Sicherheitsstereokamera mit der gesamten Funktionalität der EP 2 825 812 B1 entwickelt, die dann aber nur genau dieses eine Sicherheitskonzept umsetzt und nicht mehr flexibel ist. Sollte im Übrigen eine Sicherheitskamera doch bereits in der Lage sein, auf sichere Weise Positionsinformationen auszugeben, dann ist eine Plausibilisierung dieser Positionsinformationen überflüssig; sie sind bereits sicher.

Aus der WO 2010/094466 A1 ist ein Verfahren und eine Vorrichtung zum Erstellen eines Anwenderprogramms für eine Sicherheitssteuerung bekannt. Dabei ist konfigurierbar, welcher Teil der Programmvariablen sicherheitsrelevant ist und welcher nicht, und dementsprechend gibt es einen ersten Programmteil für eine fehlersichere Verarbeitung und einen zweiten Programmteil für eine nicht fehlersichere Verarbeitung. Das löst aber nicht das Problem unzureichender Rechenkapazitäten in der Sicherheitssteuerung. Die nicht fehlersichere Verarbeitung bleibt durch begrenzte Ressourcen notgedrungen einfach. Außerdem spielt sie bestimmungsgemäß für das Sicherheitskonzept keine Rolle mehr und trägt deshalb zu dessen Flexibilität und Komplexität nicht bei.

Die DE 10 2010 007 520 B3 offenbart eine Sicherheitssteuerung mit einer Vielzahl von Anschlüssen für Sensoren. Dadurch entsteht ein Sensorverbund, in dem Sensordaten mehrerer für sich jeweils zumindest nicht zwingend sicherer Sensoren zu einem sicheren gemeinsamen Objektfeststellungssignal verrechnet werden. Es wird außerdem eine Konfiguration beschrieben, um eine geeignete Kombination einander komplementär ergänzende Sensoren für den Sensorverbund zu finden.

Es ist daher Aufgabe der Erfindung, ein Sicherheitssystem mit verbesserter Sicherheitsfunktion anzugeben

Diese Aufgabe wird durch ein Sicherheitssystem und ein Verfahren zum Absichern einer Maschine nach Anspruch 1 beziehungsweise 14 gelöst. Das Sicherheitssystem umfasst mindestens einen sicheren Sensor, der die Maschine oder einen Bereich mit Bezug zu der Maschine erfasst, wie deren Umgebung oder einen Zugangsweg, und aus diesen Sensorinformationen sichere Daten oder Signale erzeugt. Dabei ist der Begriff sicher im Sinne der einleitend genannten oder vergleichbarer Normen zu verstehen, es sind also Maßnahmen ergriffen, um Fehler bis zu einem spezifizierten Sicherheitsniveau zu beherrschen. Der sichere Sensor und/oder mindestens ein nicht sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Eine nicht sichere Auswertung verarbeitet die nicht sicheren Daten. Das ist ein Funktionszweig auch für komplexe und flexible Auswertungen. Optional können die sicheren Daten einfließen, die aber im Funktionszweig lediglich als zusätzlicher Teil der nicht sicheren Daten aufzufassen sind. Weiterhin prüft eine sichere Auswertung das Ergebnis der nicht sicheren Auswertung mit Hilfe der sicheren Daten. Dieser sichere Test- oder Plausibilisierungszweig stellt ein gefordertes Sicherheitsniveau für das Gesamtsystem einschließlich Funktionszweig her. Das entspricht nach den einleitend genannten Sicherheitsnormen einer akzeptierten einkanaligen Sicherheitsarchitektur mit Testung.

Die Erfindung geht von dem Grundgedanken aus, sichere Daten zum Testen zu verwenden, deren Informationsgehalt gegenüber den nicht sicheren Daten und dem daraus im Funktionszweig der nicht sicheren Auswertung gefundenen Auswertungsergebnis gering ist. Die sicheren Daten sind also im Vergleich zu dem Auswertungsergebnis von geringerer Genauigkeit und/oder seltener verfügbar. Die sicheren Daten bilden eine Art Raster um die Auswertungsergebnisse, mit denen zu große Ausbrüche erkannt werden, die aber nicht ausreichen würden, um jederzeit und mit beliebiger Präzision die Auswertungsergebnisse zu verifizieren. Dabei geht es nicht nur um Toleranzen bei einem Vergleich, den sicheren Daten fehlt vielmehr dediziert gemäß der sicheren Auswertung eine den Auswertungsergebnissen aus den nicht sicheren Daten entsprechende Informationstiefe. Die sichere Auswertung hat die Sensorinformationen mit einem sehr spezifischen Ziel zu den sicheren Daten ausgewertet und dabei deren Informationsgehalt erheblich ausgedünnt oder verdichtet. Die sicheren Daten ersetzen folglich keinesfalls die nicht sichere Auswertung, es besteht nicht einfach Redundanz. Beispielsweise haben die sicheren Daten eine geringere Orts- oder Zeitauflösung, insbesondere um einen Faktor n=2... 10 oder noch höher, oder sie sind nur zu bestimmten Zeiten oder in bestimmten Konstellationen verfügbar.

Die Erfindung hat den Vorteil, dass auch komplexe Sicherheitsfunktionen implementierbar und flexibel anpassbar werden. Es erfolgt nicht einfach nur eine herkömmliche Sensordatenfusion auf Ebene einfacher sicherer Signale. Vielmehr besteht die Möglichkeit, zunächst Sensorinformationen verschiedener sicherer und/oder nicht sicherer Sensoren einzusammeln und danach eine kombinierte Sicherheitsfunktion zu realisieren. Das basiert auf verfügbaren Hardwarebausteinen, es muss also nicht auf die Entwicklung mächtigerer Sicherheitsschnittstellen zur Übergabe komplexer sicherer Daten gewartet werden, und ebenso nicht auf Sicherheitssteuerungen mit erheblich mehr Rechenleistung. Mit der erfindungsgemäßen Architektur eines Sicherheitssystems kann das gesamte Spektrum an Sicherheitsniveaus abgebildet werden, beispielsweise Performance Level PL a bis PL d. Damit können der jeweiligen Anwendung angemessene Sicherheitsniveaus verwendet und damit die Kosten reduziert werden, da nicht mangels Flexibilität überdimensionierte Sicherheitslösungen eingesetzt werden müssen, die im speziellen Fall gar nicht gebraucht werden. Es ist möglich, aus einer gewaltigen Vielfalt sicherer wie nicht sicherer Sensoren zu schöpfen und damit eine große Lösungsvarianz anzubieten.

Die Sensoren sind vorzugsweise allesamt oder zumindest teilweise optoelektronische Sensoren. Das betrifft sowohl die sicheren als auch die nicht sicheren Sensoren, denn damit lässt sich ein Bereich um die Maschine besonders gut überwachen.

Die sichere Auswertungseinheit ist vorzugsweise für die Erzeugung eines Absicherungssignals an die Maschine ausgebildet, wenn das Auswertungsergebnis nicht plausibel ist. In diesem Fall ist der Test durch den Plausibilisierungszweig gescheitert, die nicht sichere Auswertung demnach als unzuverlässig erkannt beziehungsweise ein Fehler aufgedeckt. Es ist denkbar, das noch unter vorgegebenen Kriterien zu tolerieren, etwa einen nächsten Testzyklus noch abzuwarten. Spätestens dann aber gibt das Sicherheitssystem ein Absicherungssignal an die Maschine aus, die daraufhin in einen sicheren Zustand übergeht, beispielsweise anhält, verlangsamt oder ausweicht.

Die nicht sichere Auswertungseinheit ist vorzugsweise für die Erzeugung von Steuersignalen an die Maschine ausgebildet, insbesondere zum Absichern der Maschine. Die Ansteuerung der Maschine durch die nicht sichere Auswertungseinheit schließt das Absichern ausdrücklich als Möglichkeit ein, wenn das Ergebnis des Verarbeitens der nicht sicheren Daten dieses Erfordernis ergibt. Durch die Überprüfung der nicht sicheren Auswertungseinheit mittels der sicheren Auswertungseinheit ist die Gefahr eines unerkannten Fehlers in der nicht sicheren Auswertungseinheit auf den Rahmen der fehlenden Genauigkeit und/oder die Dauer zwischen zwei Tests begrenzt. Damit erreicht das Sicherheitssystem als Ganzes und einschließlich der isoliert betrachtet nicht sicheren Auswertungseinheit ein spezifiziertes Sicherheitsniveau.

Das Sicherheitssystem weist bevorzugt eine Sicherheitssteuerung mit der sicheren Auswertungseinheit auf. Die sichere Auswertungseinheit bildet somit ein eigenes Gerät. Der sichere Sensor übergibt die sicheren Daten an die Sicherheitssteuerung. Die Sicherheitssteuerung ist sicher, hat aber nur einen begrenzten Funktionsumfang beziehungsweise begrenzte Speicher- und Rechenkapazität sowie Bandbreite der Datenschnittstellen. Alternativ zu einer separaten Sicherheitssteuerung ist eine Implementierung als Funktionsblock in dem sicheren Sensor vorstellbar.

Das Sicherheitssystem weist bevorzugt eine Rechnereinheit mit der nicht sicheren Auswertungseinheit auf. Die Rechnereinheit ist ebenfalls ein eigenes Gerät, aber keine Sicherheitssteuerung, also nicht sicher ausgebildet. Beispiele sind eine nicht sichere Steuerung oder Standardsteuerung, aber auch ein Industriecomputer mit CPU und/oder GPU sowie ein Rechnernetzwerk einschließlich einer Cloud. An die Rechnereinheit werden die nicht sicheren Daten übergeben, sei es von dem sicheren Sensor oder dem nicht sicheren Sensor. Die Rechnereinheit ist bevorzugt für komplexe Auswertungen ausgebildet, hat einen hohen Funktionsumfang und große Speicher- und Rechenkapazitäten sowie Bandbreite der Datenschnittstellen. Alternativ zu einer separaten Rechnereinheit ist eine Implementierung als Funktionsblock in dem nicht sicheren oder auch dem sicheren Sensor vorstellbar.

In einer weiteren denkbaren Ausführungsform sind die sichere Auswertungseinheit und die nicht sichere Auswertungseinheit in einem gemeinsamen Gerät implementiert. Das ist aber nicht die bevorzugte Lösung, da jeweils eigene Hardwarebausteine gezielter für ihre jeweiligen Aufgaben ausgelegt werden können.

Die sicheren Daten weisen bevorzugt mindestens ein binäres Objektfeststellungssignal auf. Noch bevorzugter bestehen die sicheren Daten ausschließlich aus mindestens einem binären Objektfeststellungssignal. Das ist eine übliche Ausgangsgröße eines sicheren Sensors, die in herkömmlichen Anwendungen direkt oder mittelbar nach Verknüpfung in einer zwischengeschalteten Sicherheitssteuerung als Absicherungssignal an die Maschine ausgegeben wird. Im erfindungsgemäßen Sicherheitssystem wird das binäre Objektfeststellungssignal von der sicheren Auswertungseinheit zum Testen benutzt und wirkt so allenfalls mittelbar als Absicherungssignal.

Die sicheren Daten weisen bevorzugt Informationen auf, ob ein Schutzfeld verletzt ist und welches das ist. Das erfolgt üblicherweise in Form binärer Objektfeststellungssignale, ist prinzipiell aber auch in einem anderen Datenformat möglich. Wird nur ein Schutzfeld überwacht, so ist dessen Identität automatisch bekannt, ohne dass die sicheren Daten dazu eine Information enthalten müssen. Bei mehreren Schutzfeldern werden wahlweise mehrere Ausgänge als Übertragungsweg oder ein Protokoll verwendet, das durch bestimmte Zeitschlitze oder sonstige Codierung die Identität der Schutzfelder erkennen lässt.

Der sichere Sensor ist bevorzugt als Sicherheitslaserscanner ausgebildet. Bei mehreren sicheren Sensoren ist mindestens einer davon ein Sicherheitslaserscanner, in einigen Ausführungsformen sind sogar alle sicheren Sensoren Sicherheitslaserscanner. Das sind in der Sicherheitstechnik sehr bewährte Sensoren mit großem Erfassungsbereich, die zugleich auch als Quelle für hochwertige nicht sichere Daten in Form von Scandaten beziehungsweise Objektkonturen oder Punktwolken dienen können. Sicherheitslaserscanner sind insbesondere in der Lage, Verletzungen von einem oder mehreren konfigurierten Schutzfeldern zu erkennen und entsprechende sichere Daten etwa in Form binärer Schaltsignale auszugeben. Schutzfeldüberwachungen sind aber auch mit anderen sicheren optoelektronischen Sensoren denkbar, beispielsweise mit Lichtgittern sowie zwei- oder dreidimensionalen Kameras, sowie mit sonstigen Sensoren wie kapazitiven Sensoren oder Trittmatten.

Die nicht sichere Auswertungseinheit ist bevorzugt dafür ausgebildet, den Abstand eines Objekts zu der Maschine zu bestimmen. Mit diesem Abstand kann insbesondere eine abstandsbasierte Absicherung der Maschine erfolgen, die also dann abgesichert wird, wenn ein Objekt der Maschine zu nahekommt. Vorzugsweise wird auch die Geschwindigkeit bestimmt (Speed-and-Separation Monitoring). Bevorzugt wird nicht der Abstand beliebiger Objekte überwacht, sondern es werden Personen oder sogar Körperteile erkannt und zumindest einige bekannte sonstige Objekte auch nahe an der Maschine zugelassen. Es sei nochmals darauf hingewiesen, dass diese sicherheitsrelevante Auswertung in der nicht sicheren Auswertungseinheit stattfindet. Die Sicherheit entsteht durch die Verifikation mittels der sicheren Auswertungseinheit.

Der sichere Sensor ist bevorzugt dafür ausgebildet, ein Raster aus einer Vielzahl von Schutzfeldern zu überwachen, wobei die sicheren Daten über die Identität eines verletzten Schutzfeldes eine sichere Positionsinformation aufweisen. Hiermit werden zu einer Abstandsüberwachung passende sichere Vergleichsdaten erfasst. Durch das Raster an sicher überwachten Schutzfeldern ist mit der Genauigkeit des Rasters die Position eines Objekts in der Umgebung der Maschine sicher erfasst. Diese Positionsinformation ist gröber als diejenige der Abstandsüberwachung in der nicht sicheren Auswertungseinheit und wird durch wenige sichere Daten, insbesondere binäre Objektfeststellungssignale ausgegeben. Das genügt aber, um Fehler der nicht sicheren Abstandsüberwachung aufzudecken.

Die sichere Auswertungseinheit ist bevorzugt dafür ausgebildet, das Auswertungsergebnis der nicht sicheren Auswertungseinheit zu einem Zeitpunkt zu überprüfen, in dem sich die Identität eines verletzten Schutzfeldes ändert. Der Test findet also zu ganz bestimmten Zeitpunkten statt, wobei diese speziell durch Änderungen in den erkannten Schutzfeldverletzungen getriggerten Tests je nach Ausführungsform zyklische Tests ergänzen oder ersetzen. In dem Moment, in dem ein Schutzfeld erstmals verletzt wird, muss sich das eingreifende Objekt an dessen Rand befinden. Besonders wenn zugleich eine frühere Schutzfeldverletzung eines benachbarten Schutzfeldes nicht mehr vorliegt, ist zu diesem Zeitpunkt die Objektposition mit hoher Genauigkeit sogar besser als das Raster der Schutzfelder bekannt.

Die nicht sichere Auswertungseinheit ist bevorzugt dafür ausgebildet, ein Fahrzeug zu navigieren, vorzugsweise ein autonomes Fahrzeug (AGV, Automated Guided Vehicle). Das schließt je nach Ausführungsform die Selbstlokalisierung, Wegfindung, Umgebungserfassung und Absicherung des Fahrzeugs ein. Das Sicherheitssystem fährt vorzugsweise mit, zumindest ein Teil der Sensoren, wobei ergänzende stationäre Sensoren und beispielsweise eine nicht sichere Auswertung in einer Cloud außerhalb des Fahrzeugs denkbar sind. Für derartige Navigationsaufgaben werden beispielsweise SLAM-Algorithmen verwendet (Simultaneous Localisation and Mapping), die sehr rechenaufwändig und daher in einer Sicherheitssteuerung nicht umsetzbar sind.

Die sicheren Daten weisen bevorzugt eine Positionsinformation an mindestens einer Referenzposition auf, insbesondere indem der sichere Sensor Referenzschutzfelder überwacht. Für die Navigationsanwendung sind das geeignete sichere Daten zum Testen der nicht sicheren Auswertungseinheit. Die nicht sicher berechnete Navigation muss zumindest die Referenzpositionen reproduzieren, wobei das Sicherheitsniveau unter anderem durch die Häufigkeit von Referenzpositionen vorgegeben wird. Besonders bevorzugt werden Referenzpositionen dadurch gewonnen, dass von dem sicheren Sensor Referenzschutzfelder an bekannten Positionen auf Verletzung überprüft werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer Ausführungsform eines Sicherheitssystems;
- Fig. 2: eine beispielhafte Darstellung einer Überwachung eines Roboters mit Abstandsüberwachung und einem Raster von Schutzfeldern zweier Sicherheitslaserscanner;
- Fig. 3: eine schematische Blockdarstellung einer Ausführungsform eines Sicherheitssystems für das Beispiel der Figur 2;
- Fig. 4: eine schematische Blockdarstellung einer Ausführungsform eines Sicherheitssystems für eine ähnliche Überwachungssituation wie in Figur 2, nun jedoch mit Sicherheitslaserscanner und Sicherheits-3D-Kamera;
- Fig. 5: eine schematische Blockdarstellung einer Ausführungsform eines Sicherheitssystems für die Navigation eines Fahrzeugs;
- Fig. 6: eine beispielhafte Darstellung einer Navigation eines Fahrzeugs mit Positionsüberprüfung durch Schutzfelder;
- Fig. 7: eine Darstellung eines herkömmlichen Sicherheitskonzepts; und
- Fig. 8: eine schematische Blockdarstellung eines herkömmlichen Sicherheitssystems zu dem Sicherheitskonzept der Figur 6.

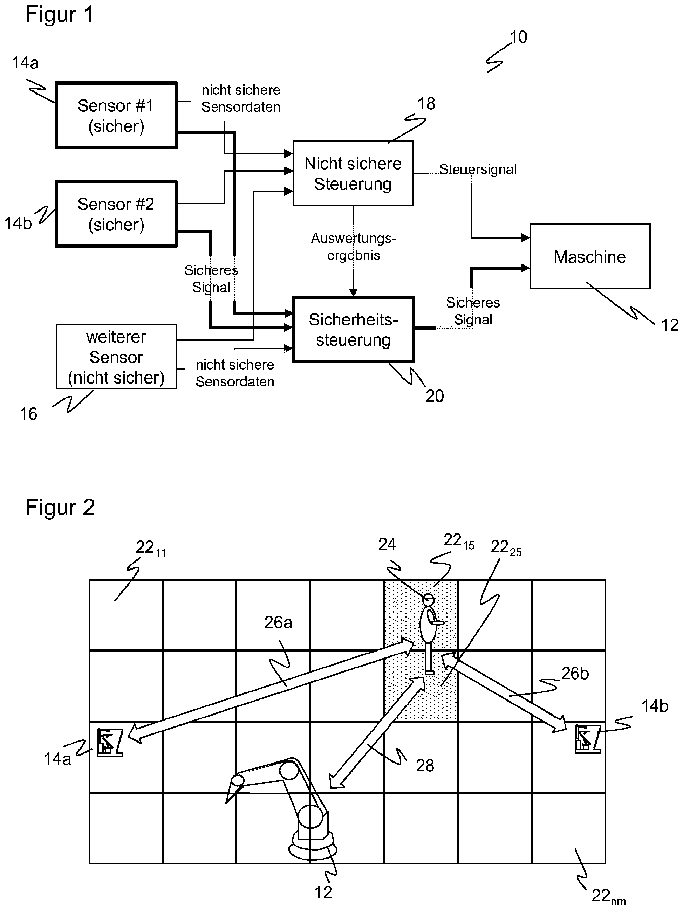

Figur 1 zeigt eine schematische Blockdarstellung eines Sicherheitssystems 10 zum Absichern einer Maschine 12, wie einen Roboter, ein Fahrzeug oder eine sonstige meist komplexe Maschine. Mindestens ein sicherer Sensor, im Beispiel sind es zwei sichere Sensoren 14a-b, überwacht einen der Maschine 12 zugeordneten Bereich, wie dessen Umgebung oder einen Zugangsweg. Zusätzlich kann optional ein nicht sicherer Sensor 16 vorgesehen sein. Die Begriffe sicher und nicht sicher sind weiterhin so zu verstehen, dass entsprechende Komponenten, Übertragungswege und Auswertungen die einleitend genannten normierten Kriterien für Sicherheit erfüllen beziehungsweise nicht erfüllen. Die Sensoren sind vorzugsweise optoelektronische Sensoren, etwa Laserscanner oder Kameras, können aber auch zumindest teilweise auf einem anderen Sensorprinzip basieren.

Zur Auswertung der verschiedenen Sensordaten weist das Sicherheitssystem eine nicht sichere Steuerung 18 und eine Sicherheitssteuerung 20 auf. Das sind vorzugsweise jeweils für sich eigene Hardwarebausteine wie dargestellt. Alternativ könnten es zumindest teilweise Funktionsblöcke in den Sensoren 14, 16 oder eine gemeinsame Steuerung 18, 20 sein. Die Unterteilung in sichere und nicht sichere Pfade bliebe dabei bestehen.

Die nicht sichere Steuerung 18 weist vorzugsweise eine hohe Rechenleistung und Flexibilität auf und ist in der Lage, große Datenmengen zu kommunizieren und zu verarbeiten. Beispielsweise handelt es sich um eine nicht sichere Standardsteuerung oder um eine CPU oder auch GPU in einem Industriecomputer. Vorstellbar sind weiterhin eine Edge-Computing Infrastruktur oder eine Cloudlösung. Da die Verarbeitung nicht sicher sein muss, sind auch Ansätze des maschinellen Lernens möglich, etwa Deep Learning und sämtliche Varianten neuronaler Netze.

Die nicht sichere Steuerung 18 empfängt und verarbeitet nicht sichere Sensordaten von dem nicht sicheren Sensor 16, sofern vorhanden, alternativ oder zusätzlich auch nicht sichere Daten von einem sicheren Sensor 14a-b. Die nicht sicheren Sensordaten sind typischerweise komplex und umfangreich, etwa Bilder, Punktwolken oder Scandaten. Die nicht sichere Steuerung 18 bildet einen Funktionszweig, in dem komplexe Auswertungen großer Sensordatenmengen ablaufen. Es kann dafür Standardhardware eingesetzt werden, weil keine oder allenfalls geringe Sicherheitsanforderungen zu erfüllen sind.

Die Sicherheitssteuerung 20 dagegen ist durch zweikanalige Anschlüsse, Verarbeitungspfade und entsprechende Auswertungen sicher ausgebildet. Dafür bietet sie nur vergleichsweise einfache Auswertungsmöglichkeiten, Schnittstellen mit kleiner Bandbreite meist nur für binäre Signale sowie begrenzten Speicher- und Rechenkapazitäten.

Die Sicherheitssteuerung 20 empfängt sichere Daten der sicheren Sensoren 14a-b. Die sicheren Sensoren 14a-b haben dafür durch interne sichere Auswertung die ursprünglichen Sensordaten bereits erheblich reduziert oder verdichtet. Regelmäßig wird lediglich ein binäres sicheres Signal ausgegeben (OSSD, Output Signal Switching Device), in einigen Fällen mehrere davon, um noch die Information zu liefern, welches von mehreren parallel überwachten Schutzfeldern verletzt ist. Optional erhält die Sicherheitssteuerung 20 auch noch nicht sichere Daten des nicht sicheren Sensors 16, wobei die zusätzliche Redundanz das Sicherheitsniveau erhöhen kann.

Die Sicherheitssteuerung 20 bildet einen Test- oder Plausibilisierungszweig für die nicht sichere Steuerung 18. Dazu wird von der nicht sicheren Steuerung 18 ein Auswertungsergebnis an die Sicherheitssteuerung übergeben. Das Auswertungsergebnis kann, muss jedoch keineswegs die angestrebte Ausgabegröße der nicht sicheren Auswertung sein, sondern ist möglicherweise nur ein Teil davon oder sogar ein spezifischer Testwert, der bei der eigentlichen Auswertung für die Sicherheitssteuerung 20 erzeugt wird. Die Sicherheitssteuerung 20 prüft nun anhand der sicheren Daten, ob das Auswertungsergebnis ihrer Erwartungshaltung entspricht, und deckt damit mögliche Fehler der nicht sicheren Steuerung 18 auf. Weiter unten werden Beispiele für das zu Testzwecken übergebene Auswertungsergebnis und die sicheren Daten gegeben, anhand derer das Auswertungsergebnis getestet wird. Die Erwartungshaltung wird in Figur 1 von den sicheren Signalen der sicheren Sensoren 14a-b abgeleitet. Es soll erwähnt sein, dass ebenso andere sichere Systemdaten, etwa sichere Positionsinformationen der Maschine 12 oder Prozessinformationen wie bestimmte Abmessungen und dergleichen verwendet werden können. Die jeweilige Quelle solcher sicherer Daten, insbesondere die Maschine 12, wird in solchen Fällen bezüglich dieser Rolle als sicherer Sensor aufgefasst.

Die nicht sichere Steuerung 18 erzeugt aus ihrer Auswertung Steuersignale für die Maschine 12. Das schließt ausdrücklich deren Absicherung ein, also das Verbringen in einen sicheren Zustand, weil die (zunächst) nicht sichere Auswertung eine Gefahrensituation erkannt hat. Die Maschine 12 hat in aller Regel noch eine eigene Steuerung, mit welcher die nicht sichere Steuerung 18 kommuniziert. Die Sicherheitssteuerung 20 wiederum sichert die Maschine 12 mit einem sicheren Absicherungssignal ab, wenn der Test der nicht sicheren Steuerung 18 einen Fehler aufgedeckt hat. Dabei ist vorgelagert noch denkbar, Fehler bis zu einem gewissen Grad zu tolerieren, beispielsweise keine Sicherheitsreaktion auszulösen, wenn der Fehler im folgenden Testzyklus nicht mehr auftritt. Ohne Darstellung durch entsprechende Pfeile ist denkbar, dass die Maschine 12 Informationen an die nicht sichere Steuerung 18 und/oder die Sicherheitssteuerung 20 zurückgibt.

Somit kontrolliert die Sicherheitssteuerung 20 die nicht sichere Steuerung 18 anhand des Auswertungsergebnisses. Die Maschine 12 wird vornehmlich von der nicht sicheren Steuerung 18 angesteuert. Die Sicherheitssteuerung 20 prüft nur als passiver Überwachungsmechanismus regelmäßig, ob die Steuersignale der nicht sicheren Steuerung 18 mit den sicheren Daten und der daraus abgeleiteten Erwartungshaltung konsistent sind. Im Fall einer Abweichung beziehungsweise dem Auftreten eines unplausiblen Auswertungsergebnisses der nicht sicheren Steuerung 18 kann die Sicherheitssteuerung 20 eingreifen und die Ansteuerung der Maschine 12 übernehmen. Die Absicherung der Maschine 12 kann deren Stoppen oder Nothalt bedeuten. Andere sicherheitsgerichtete Manöver sind bahntreues Verlangsamen, Stoppen und Wiederanlaufen sowie sicherheitsgerichtete Ausweichmanöver, was sich besonders im Falle von Robotern oder AGV eignet.

Das Vorgehen, Sicherheit durch Tests herzustellen, wird grundsätzlich in der Sicherheitsnorm ISO/EN 13849-1 beschrieben. Mit jedem Eingang, d. h. einem sicheren Sensor 14a-b oder einem nicht sicheren Sensor 16, wird eine einkanalige Architektur mit Testung der Kategorie 2 erzielt. Durch mehrere Sensoren 14a-b, 16 sind damit auch höchste Sicherheitskategorien wie die Kategorie 4 oder der Performance Level PL d erreichbar. Ziel der Erfindung ist aber nicht unbedingt, höchste Sicherheitsanforderungen zu erfüllen, auch wenn das möglich ist, sondern Flexibilität einschließlich verschiedenster Sicherheitsniveaus. Das konkret erreichte Sicherheitsniveau ist nicht allein von der grundlegenden Architektur des Sicherheitssystems 10, sondern auch von den Sicherheitsniveaus der verwendeten Sensoren 14a-b sowie den Auswertungen und Plausibilisierungsschritten abhängig.

Zusammenfassend wird eine performante nicht sichere Steuerung 18 ohne spezielle Sicherheitsarchitektur als Funktionszweig zur Verarbeitung komplexer Sensordaten mit einer einfachen Sicherheitssteuerung 20 als Testzweig kombiniert. Die sicherheitstechnische Testung der nicht sicheren Steuerung 18 wird in eine separate Sicherheitssteuerung 20 verlagert. Ergebnisse der komplexen Sensordatenverarbeitung in der nicht sicheren Steuerung 18 werden gegen eine Erwartungshaltung geprüft. Durch die im sicheren Sensor bereits erfolgte sicherheitstechnische Aufbereitung zu einfachen sicheren Daten, wie sicheren Schaltsignalen, können die sicheren Daten als Erwartungshaltung zur Validierung der Auswertung der nicht sicheren Steuerung 18 verwendet werden. Zudem wird bevorzugt ausgenutzt, dass viele sichere Sensoren 14a-b sowohl sichere Schaltsignale als auch komplexe Sensordaten liefern. Alternativ wird ein zusätzlicher nicht sicherer Sensor 16 als Quelle der komplexen Sensordaten eingesetzt. Erfindungsgemäß lassen sich flexibel bisher nicht zugängliche Sicherheitsfunktionen auf einer verfügbaren nicht sicheren Steuerung 18 und Sicherheitssteuerung 20 realisieren und die hochwertigen Sensorinformationen besser nutzen. Dieses Konzept kann überall dort umgesetzt werden, wo sichere beziehungsweise nicht sichere Sensoren 14a-b, 16 sowohl Sensordaten wie zusätzlich sichere Daten oder Schaltsignale als Grundlage der Plausibilitätsprüfung anbieten.

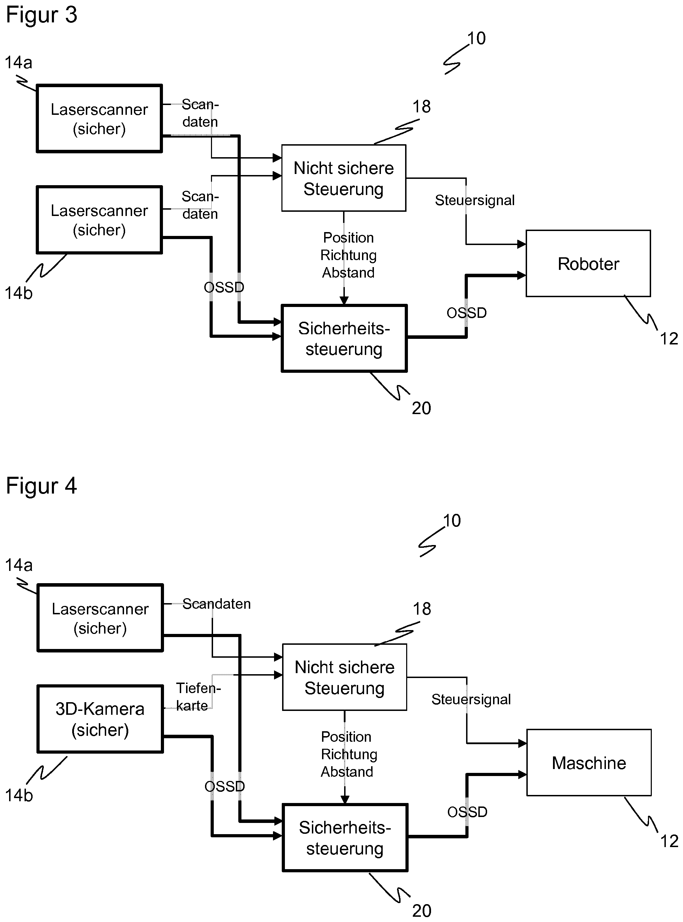

Figur 2 zeigt beispielhaft die Überwachung eines Roboters 12 mit Hilfe zweier Sicherheitslaserscanner 14a-b zur Umsetzung einer Abstandsüberwachung (insbesondere Speed-and-Separation Monitoring). Figur 3 zeigt das entsprechende Sicherheitssystem 10 in einer Blockdarstellung. Die Sicherheitslaserscanner 14a-b überwachen ein Raster von Schutzfeldern 22₁₁..22ₙₘ. Das gezeigte regelmäßige Rechteckraster aus untereinander identischen Schutzfeldern 22₁₁..22ₙₘ ist besonders übersichtlich, aber es sind auch unregelmäßige, verschieden große sowie lückenhaft angeordnete Schutzfelder möglich.

Nun wird eine Objekt 24, hier eine Person, einerseits von den Sicherheitslaserscannern 14a-b in bestimmten Schutzfeldern 22₁₅, 22₂₅ erfasst und entsprechende binäre Schaltsignale (OSSD) an die Sicherheitssteuerung 20 übergeben. Außerdem werden die Scandaten als nicht sichere Sensordaten in der nicht sicheren Steuerung 18 ausgewertet. Dabei werden mittels Objektlokalisation Entfernungen zum jeweiligen Scannerzentrum ausgerechnet, wie durch Pfeile 26a-b angedeutet. Daraus kann dann auch der Abstand der Person beziehungsweise des Objekts 24 zum Roboter 12 entsprechend dem Pfeil 28 abgeleitet werden.

Die nicht sichere Steuerung 18 entscheidet aufgrund des Abstands des Objekts 24, das als Person erkannt oder lediglich als beliebiges Objekt erfasst sein kann, und eventuell weiterer Größen wie Richtung und Geschwindigkeit der Bewegung, welche Steuerbefehle dem Roboter 12 gegeben werden sollen und ob eine Absicherung notwendig ist. Bis hierher ist diese Auswertung und Steuerung noch nicht sicher. Die nicht sichere Steuerung 18 übergibt deshalb Auswertungsergebnisse wie Position, Abstand oder Bewegungsrichtung an die Sicherheitssteuerung 20.

Die Sicherheitssteuerung 20 andererseits hat aufgrund der verletzten Schutzfelder 22₁₅, 22₂₅ eine Erwartungshaltung zumindest über die Position des Objekts 24. Damit lässt sich ein Intervall angeben, in dem die von der nicht sicheren Steuerung 18 ermittelte Position beziehungsweise der Abstand des Objekts 24 liegen muss, um plausibel zu sein. Liegt das von der nicht sicheren Steuerung 18 erhaltene Auswertungsergebnis in diesem Intervall, so gilt der errechnete Abstandswert als plausibel. Andernfalls löst die Sicherheitssteuerung 20 selbst eine sicherheitsgerichtete Reaktion des Roboters 12 aus, sobald sie die Abstandsüberwachung der nicht sicheren Steuerung 18 nicht mehr als verlässlich betrachten kann.

Besonders vorteilhaft ist, einen Statuswechsel von Schutzfeldern 22₁₁..22ₙₘ als Trigger für eine Plausibilisierung zu verwenden. Statuswechsel bedeutet, dass ein Objekt 24 in einem bisher nicht verletzten Schutzfeld 22₁₁..22ₙₘ erfasst wird oder umgekehrt ein Schutzfeld 22₁₁..22ₙₘ nicht länger verletzt ist. Die Position des sicherheitsrelevanten Objekts 24 ist gerade bei einem solchen Statuswechsel auch der Sicherheitssteuerung 20 besonders genau bekannt, da sich das Objekt 24 dann an der Schutzfeldgrenze befinden muss. Dieser Zeitpunkt ist also besonders günstig für eine Plausibilisierung.

Figur 4 zeigt eine abgewandelte weitere Ausführungsform des Sicherheitssystems 10, bei dem eine sichere 3D-Kamera 14b den einen Sicherheitslaserscanner 14b ersetzt. Beispielsweise weisen der Sicherheitslaserscanner 14a ein hohes Sicherheitsniveau SIL 2 oder PL d und die 3D-Kamera 14b ein mittleres Sicherheitsniveau PL c auf. Alternativ könnte die 3D-Kamera auch nicht sicher sein. Wiederum hat die nicht sichere Steuerung 18 die Aufgabe, aus den nicht sicheren Daten der 3D-Kamera 14b, insbesondere einer Tiefenkarte, sowie möglicherweise ergänzend den Scandaten des Sicherheitslaserscanners 14a und gegebenenfalls Prozessdaten der Maschine 12 den Abstand zwischen Maschine 12 und Objekt 24 zu bestimmen. Der Abstand wird in der Sicherheitssteuerung 20 mit einem weniger genau, aber sehr sicher bekannten Erwartungswert verglichen und so sicherheitstechnisch aufgewertet. Weitere Auswertungsergebnisse, wie Bewegungsrichtung oder Geschwindigkeit, können in der nicht sicheren Steuerung 18 bestimmt und in der Sicherheitssteuerung 20 plausibilisiert werden.

Wie im Beispiel der Figur 2 kann wieder ein Raster von Schutzfeldern überwacht werden, um den Erwartungswert abzuleiten, und insbesondere gerade im Zeitpunkt eines signalisierten Schutzfeldstatuswechsels der Vergleich zur Plausibilisierung angestoßen werden. Mit einem solchen Sicherheitssystem 10 kann die hochwertige Sicherheitsfunktion eines dreidimensionalen Speed-and-Separation Monitoring mit hohem Sicherheitsniveau realisieren werden.

Figur 5 zeigt eine schematische Blockdarstellung einer weiteren Ausführungsform des Sicherheitssystems 10 für die sichere Navigation eines Fahrzeugs, speziell eines mindestens teilautonomen Fahrzeugs (AGV, Automated Guided Vehicle). Dargestellt ist eine Ausführungsform mit nur einem Sicherheitslaserscanner 14, wobei alternativ mehrere Sicherheitslaserscanner und auch andere Sensoren wie Kameras und dergleichen verwendet werden können.

Die Navigationsaufgabe erfordert den Einsatz von sehr aufwändigen Verfahren wie SLAM (Simultaneous Localisation and Mapping), was eine Sicherheitssteuerung 20 mit ihren begrenzten Ressourcen keinesfalls leisten könnte. Da die nicht sichere Steuerung 18 im Prinzip auf beliebige Hardware zurückgreift, sind dort solche Algorithmen umsetzbar.

Die Sicherheitssteuerung 20 hat wiederum die Aufgabe, die Auswertungsergebnisse zu validieren, insbesondere Positionen aufgrund von Schutzfeldzuständen des Sicherheitslaserscanners 14 zu bestätigen. Dazu sendet möglicherweise ohne Darstellung in Figur 5 die nicht sichere Steuerung 18 noch Trigger oder Umschaltsignals für wechselnde Schutzfeldkonfigurationen an den Sicherheitslaserscanner 14 zurück.

Es können Testpositionen im Arbeitsbereich des Fahrzeugs 12 konfiguriert werden, an denen eindeutige Umgebungsmerkmale durch spezielle Referenzschutzfelder auf Anwesenheit und mindestens grobe Position geprüft werden. Figur 6 zeigt als ein Anwendungsbeispiel die Navigation eines Fahrzeugs 12a-c in drei verschiedenen Positionen in einer Halle mit Umgebungsobjekten 30, wie Regalen, Wänden und dergleichen. Ein nicht eingezeichneter Sicherheitslaserscanner vorne am Fahrzeug 12a-b überwacht sechs simultane Schutzfelder S1-S6, die so programmiert sind, dass in einer Referenzposition etwa an einem Übergabepunkt, hier Fahrzeug 12a, eine ganz bestimmte und möglichst eindeutige Kombination der verletzten und nicht verletzten Schutzfelder S1-S6 beziehungsweise eine entsprechende OSSD-Kombination des Sicherheitslaserscanners vorliegt.

Beispielsweise werden sichere Daten von dem Sicherheitslaserscanner an die Sicherheitssteuerung 20 übergeben, die ein sechsstelliges Bitmuster entsprechend der hier beispielhaft sechs Schutzfelder S1-S6 bilden und in denen ein zugehöriges Bit auf Null gesetzt ist, wenn das Schutzfeld frei, und auf Eins, wenn es verletzt ist. Dementsprechend wird nur das Fahrzeug 12a an der Referenzposition das Referenzbitmuster S=101010 liefern, während bei Fahrzeug 12b mit S=001010 das Schutzfeld S1 im Gegensatz zur Referenzposition frei bleibt und bei Fahrzeug 12c mit S=000000 sogar alle Schutzfelder frei sind. An jeder Position außer für Fahrzeug 12a stimmt somit mindestens ein Bit nicht mit der Erwartung für die Referenzposition überein. Somit kann in der Position des Fahrzeugs 12a die sicher bestimmte Referenzposition in der Sicherheitssteuerung 20 die beispielsweise über SLAM ermittelten Position der nicht sicheren Steuerung 18 verifizieren.

Diese Positionsbestätigung kann komplett im sicheren Testzweig der Sicherheitssteuerung 20 abgebildet werden. Der Sicherheitslaserscanner überwacht die konfigurierten Referenzschutzfelder S1-S6 und liefert sichere Schaltsignale an die Sicherheitssteuerung 20. Zu aus den Status der Referenzschutzfelder abgeleiteten Triggerpunkten, deren Position genau bekannt ist, wird das von der nicht sicheren Steuerung 18 gelieferte Auswertungsergebnis mit der aufgrund der Konfiguration der Referenzschutzfelder bekannten Position verglichen und bestätigt.

Dies ist also ein weiteres Beispiel, wie durch Übergabe weniger extrem verdichteter sicherer Daten komplexe nicht sichere Auswertungen verifiziert werden können. Die sicheren Daten sind lediglich ein Bitmuster einer kurzen Länge aus Objektfeststellungssignalen oder Schutzfeldverletzungen. Die Länge entspricht hier der Anzahl simultan überwachter Schutzfelder und beträgt damit typischerweise höchstens zehn, höchstens zwanzig, höchstens fünfzig oder höchstens hundert. Gerade bei einer höheren Zahl zu konfigurierender Schutzfelder kann das System einen Automatismus anbieten, um Schutzfelder festzulegen oder jedenfalls vorzuschlagen. Beispielsweise könnte das Fahrzeug 12a in die Referenzposition gebracht werden, und der jeweilige Überstand der Schutzfelder S1, S3, S5 gegenüber den Schutzfeldern S2, S4, S6 an der Grenze zu den Umgebungsobjekten 30 wird automatisch festgelegt.

Vorzugsweise finden Validierungen der Position an sicherheitstechnisch besonders kritischen Positionen statt, etwa dort, wo eine Übergabe stattfindet, wie in Figur 6, oder wo bestimmte Sicherheitsfunktionen stillgesetzt (Muting) oder Schutzfelder umgeschaltet werden. Der Trigger kann auch von der nicht sicheren Steuerung 18 aus den ermittelten Positionsdaten erzeugt werden, aber dann ist eine Watchdog-Überwachung erforderlich. Auch im Beispiel der Figur 5 kann der Statuswechsel eines oder mehrerer Referenzschutzfelder als Trigger für eine Validierung verwendet werden. Wiederum besteht der Vorteil darin, dass im Moment des Zustandswechsels die Position des Fahrzeugs 12 auch ohne SLAM besonders genau bestimmt ist.

Alternativ oder zusätzlich zu einem Sicherheitssystem 10 nur mit Sicherheitslaserscanner 14 wie in Figur 5 und 6 könnte eine Lokalisierung und Navigation auch mit anderen Sensoren erfolgen, etwa funkbasiert mittels UWB (Ultra Wideband). Ein solcher Sensor könnte natürlich mit hohem Aufwand selbst sicher ausgebildet sein, ergänzt aber vorzugsweise das Sicherheitssystem 10 als optionaler nicht sicherer Sensor 16 wie in Figur 1. Bei der Navigation mit einem solchen nicht sicheren Sensor 16 werden dann die Positionsinformationen nicht nur auf nicht sichere Weise erzeugt und in der nicht sicheren Steuerung 18 ausgewertet, sondern auch noch über eine nicht sichere Funkschnittstelle an das Fahrzeug 12 zurückübermittelt. Mit Hilfe der hier beschriebenen Referenzschutzfelder kann die Sicherheitssteuerung 20 des Fahrzeugs 12 dann prüfen, ob an der kritischen Stelle, an der die Schutzfelder zum Beispiel zur Einfahrt in einen LKW umgeschaltet werden müssen, die nicht sicher ermittelte Position korrekt ist.

## Patentansprüche

1. Sicherheitssystem (10) zum Absichern einer Maschine (12), das mindestens einen sicheren Sensor (14, 14a-b) zum Erzeugen von sicheren Daten aufweist, wobei der sichere Sensor (14, 14a-b) auch nicht sichere Daten erzeugt und/oder ein nicht sicherer Sensor (16) zum Erzeugen nicht sicherer Daten vorgesehen ist, wobei sicher bedeutet, dass fehlerbeherrschende Maßnahmen im Sinne einer Sicherheitsnorm für Maschinensicherheit und/oder für berührungslos wirkende Schutzeinrichtungen ergriffen sind und nicht sicher der Gegenbegriff ist, wonach die genannten Anforderungen an Fehlersicherheit nicht erfüllt sind,
**dadurch gekennzeichnet,**
**dass** das Sicherheitssystem (10) weiterhin eine nicht sichere Auswertungseinheit (18) zum Verarbeiten der nicht sicheren Daten sowie eine sichere Auswertungseinheit (20) aufweist, die dafür ausgebildet ist, die nicht sichere Auswertungseinheit (18) zu testen, indem ein Auswertungsergebnis des Verarbeitens der nicht sicheren Daten anhand der sicheren Daten überprüft wird, und dass die sicheren Daten im Vergleich zu dem Auswertungsergebnis eine geringere Genauigkeit aufweisen und/oder seltener verfügbar sind.

2. Sicherheitssystem (10) nach Anspruch 1,
wobei die sichere Auswertungseinheit (20) für die Erzeugung eines Absicherungssignals an die Maschine (12) ausgebildet ist, wenn das Auswertungsergebnis nicht plausibel ist.

3. Sicherheitssystem (10) nach Anspruch 1 oder 2,
wobei die nicht sichere Auswertungseinheit (18) für die Erzeugung von Steuersignalen an die Maschine (12) ausgebildet ist, insbesondere zum Absichern der Maschine (12).

4. Sicherheitssystem (10) nach einem der vorhergehenden Ansprüche,
das eine Sicherheitssteuerung (20) mit der sicheren Auswertungseinheit aufweist.

5. Sicherheitssystem (10) nach einem der vorhergehenden Ansprüche,
das eine Rechnereinheit (18) mit der nicht sicheren Auswertungseinheit aufweist.

6. Sicherheitssystem (10) nach einem der vorhergehenden Ansprüche, wobei die sicheren Daten mindestens ein binäres Objektfeststellungssignal aufweisen.

7. Sicherheitssystem (10) nach einem der vorhergehenden Ansprüche,
wobei die sicheren Daten Informationen aufweisen, ob ein Schutzfeld (22) verletzt ist und welches das ist.

8. Sicherheitssystem (10) nach einem der vorhergehenden Ansprüche,
wobei der sichere Sensor (14, 14a-b) als Sicherheitslaserscanner ausgebildet ist.

9. Sicherheitssystem (10) nach einem der vorhergehenden Ansprüche,
wobei die nicht sichere Auswertungseinheit (18) dafür ausgebildet ist, den Abstand eines Objekts (24) zu der Maschine (12) zu bestimmen.

10. Sicherheitssystem (10) nach einem der vorhergehenden Ansprüche,
wobei der sichere Sensor (14, 14a-b) dafür ausgebildet ist, ein Raster aus einer Vielzahl von Schutzfeldern (22) zu überwachen, wobei die sicheren Daten über die Identität eines verletzten Schutzfeldes (22) eine sichere Positionsinformation aufweisen.

11. Sicherheitssystem (10) nach Anspruch 10,
wobei die sichere Auswertungseinheit (20) dafür ausgebildet ist, das Auswertungsergebnis der nicht sicheren Auswertungseinheit (18) zu einem Zeitpunkt zu überprüfen, in dem sich die Identität eines verletzten Schutzfeldes (22) ändert.

12. Sicherheitssystem (10) nach einem der vorhergehenden Ansprüche,
wobei die nicht sichere Auswertungseinheit (18) dafür ausgebildet ist, ein Fahrzeug (12) zu navigieren.

13. Sicherheitssystem (10) nach Anspruch 12,
wobei die sicheren Daten eine Positionsinformation an mindestens einer Referenzposition aufweisen, insbesondere indem der sichere Sensor (14, 14a-b) Referenzschutzfelder überwacht.

14. Verfahren zum Absichern einer Maschine (12), bei dem von mindestens einem sicheren Sensor (14, 14a-b) sichere Daten und von dem sicheren Sensor (14, 14a-b) und/oder einem nicht sicheren Sensor (16) nicht sichere Daten erzeugt werden, wobei sicher bedeutet, dass fehlerbeherrschende Maßnahmen im Sinne einer Sicherheitsnorm für Maschinensicherheit und/oder für berührungslos wirkende Schutzeinrichtungen ergriffen sind und nicht sicher der Gegenbegriff ist, wonach die genannten Anforderungen an Fehlersicherheit nicht erfüllt sind,
**dadurch gekennzeichnet,**
**dass** das Verfahren weiterhin nicht sichere Daten mittels einer nicht sicheren Auswertungseinheit (18) verarbeitet, sowie eine sichere Auswertungseinheit (20) die nicht sichere Auswertungseinheit (18) testet, indem ein Auswertungsergebnis des Verarbeitens der nicht sicheren Daten anhand der sicheren Daten überprüft wird, und die sicheren Daten im Vergleich zu dem Auswertungsergebnis eine geringere Genauigkeit aufweisen und/oder seltener verfügbar sind.

## Claims

1. A safety system (10) for safeguarding a machine (12) comprising at least one safe sensor (14, 14a-b) for generating safe data, wherein the safe sensor (14, 14a-b) also generates non-safe data and/or a non-safe sensor (16) for generating non-safe data is provided, wherein safe means that fault-controlling measures in the sense of a safety standard for machine safety and/or for electro-sensitive protective equipment are taken, and non-safe is the counter term according to which the said requirements for fault safety are not fulfilled, **characterized in that** the safety system (10) further comprises a non-safe evaluation unit (18) for processing the non-safe data and a safe evaluation unit (20) which is configured to test the non-safe evaluation unit (18) by checking an evaluation result of the processing of the non-safe data on the basis of the safe data, and **in that** the safe data have a lower accuracy and/or are available less frequently compared to the evaluation result.

2. The safety system (10) according to claim 1,
wherein the safe evaluation unit (20) is configured for generating a safety signal to the machine (12) if the evaluation result is not plausible.

3. The safety system (10) according to claim 1 or 2,
wherein the non-safe evaluation unit (18) is configured for generating control signals to the machine (12), in particular for safeguarding the machine (12).

4. The safety system (10) according to any of the preceding claims,
comprising a safety controller (20) with the safe evaluation unit.

5. The safety system (10) according to any of the preceding claims,
comprising a computer unit (18) with the non-safe evaluation unit.

6. The safety system (10) according to any of the preceding claims,
wherein the safe data comprise at least one binary object detection signal.

7. The safety system (10) according to any of the preceding claims,
wherein the safe data include information as to whether a protective field (22) has been violated and which field this is.

8. The safety system (10) according to any of the preceding claims,
wherein the safe sensor (14, 14a-b) is configured as a safety laser scanner.

9. The safety system (10) according to any of the preceding claims,
wherein the non-safe evaluation unit (18) is configured to determine the distance of an object (24) from the machine (12).

10. The safety system (10) according to any of the preceding claims,
wherein said safe sensor (14, 14a-b) is configured to monitor a grid of a plurality of protective fields (22), said safe data comprising safe position information about the identity of a violated protective field (22).

11. The safety system (10) according to claim 10,
wherein the safe evaluation unit (20) is configured to check the evaluation result of the non-safe evaluation unit (18) at a time when the identity of a violated protective field (22) changes.

12. The safety system (10) according to any of the preceding claims,
wherein the non-safe evaluation unit (18) is configured to navigate a vehicle (12).

13. The safety system (10) according to claim 12,
wherein the safe data comprise position information at at least one reference position, in particular in that the safe sensor (14, 14a-b) monitors reference protective fields.

14. A method for safeguarding a machine (12), wherein safe data are generated by at least one safe sensor (14, 14a-b) and non-safe data are generated by the safe sensor (14, 14a-b) and/or a non-safe sensor (16), wherein safe means that fault-controlling measures in the sense of a safety standard for machine safety and/or for electro-sensitive protective devices are taken and non-safe is the counter term according to which the said requirements for fault safety are not fulfilled,
**characterized in that** the method furthermore processes non-safe data by means of a non-safe evaluation unit (18), and a safe evaluation unit (20) tests the non-safe evaluation unit (18) by checking an evaluation result of the processing of the non-safe data on the basis of the safe data, and the safe data have a lower accuracy in comparison with the evaluation result and/or are available less frequently.

## Revendications

1. Système de sécurité (10) pour sécuriser une machine (12), comprenant au moins un capteur sécurisé (14, 14a - b) pour générer des données sécurisées, dans lequel le capteur sécurisé (14, 14a - b) génère également des données non sécurisées et/ou il est prévu un capteur non sécurisé (6) pour générer des données non sécurisées, l'expression « sécurisé » signifiant que des mesures de contrôle d'erreurs sont prises au sens d'une norme de sécurité pour la sécurité des machines et/ou pour les équipements de protection agissant sans contact physique, et l'expression « non sécurisé » signifiant le contraire indiquant que les exigences énoncées pour la protection contre les erreurs ne sont pas remplies,
**caractérisé en ce que**
le système de sécurité (10) comprend en outre une unité d'évaluation non sécurisée (18) pour traiter les données non sécurisées et une unité d'évaluation sécurisée (20) qui est réalisée pour tester l'unité d'évaluation non sécurisée (18) en vérifiant un résultat d'évaluation du traitement des données non sécurisées sur la base des données sécurisées, et **en ce que** les données sécurisées ont une précision moindre et/ou sont disponibles moins fréquemment, par comparaison au résultat d'évaluation.

2. Système de sécurité (10) selon la revendication 1, dans lequel l'unité d'évaluation sécurisée (20) est réalisée pour générer un signal de sécurisation vers la machine (12) si le résultat d'évaluation n'est pas plausible.

3. Système de sécurité (10) selon la revendication 1 ou 2, dans lequel l'unité d'évaluation non sécurisée (18) est réalisée pour générer des signaux de commande vers la machine (12), en particulier pour sécuriser la machine (12).

4. Système de sécurité (10) selon l'une des revendications précédentes, comportant une commande de sécurité (20) qui comprend l'unité d'évaluation sécurisée.

5. Système de sécurité (10) selon l'une des revendications précédentes, comportant une unité informatique (18) qui comprend l'unité d'évaluation non sécurisée.

6. Système de sécurité (10) selon l'une des revendications précédentes, dans lequel les données sécurisées comprennent au moins un signal binaire de détection d'objet.

7. Système de sécurité (10) selon l'une des revendications précédentes, dans lequel les données sécurisées comprennent des informations indiquant si un champ de protection (22) est violé et de quel champ il s'agit.

8. Système de sécurité (10) selon l'une des revendications précédentes, dans lequel le capteur sécurisé (14, 14a - b) est réalisé sous la forme d'un scanner laser de sécurité.

9. Système de sécurité (10) selon l'une des revendications précédentes, dans lequel l'unité d'évaluation non sécurisée (18) est réalisée pour déterminer la distance d'un objet (24) par rapport à la machine (12).

10. Système de sécurité (10) selon l'une des revendications précédentes, dans lequel le capteur sécurisé (14, 14a - b) est réalisé pour surveiller une trame constituée d'une pluralité de champs de protection (22), et les données sécurisées relatives à l'identité d'un champ de protection (22) violé comprennent une information sécurisée relative à la position.

11. Système de sécurité (10) selon la revendication 10, dans lequel l'unité d'évaluation sécurisée (20) est réalisée pour vérifier le résultat d'évaluation de l'unité d'évaluation non sécurisée (18) à un instant où l'identité d'un champ de protection (22) violé change.

12. Système de sécurité (10) selon l'une des revendications précédentes, dans lequel l'unité d'évaluation non sécurisée (18) est réalisée pour naviguer un véhicule (12).

13. Système de sécurité (10) selon la revendication 12, dans lequel à au moins une position de référence, les données sécurisées comprennent une information relative à la position, en particulier du fait que le capteur sécurisé (14, 14a - b) surveille des champs de protection de référence.

14. Procédé pour sécuriser une machine (12), dans lequel des données sécurisées sont générées par au moins un capteur sécurisé (14, 14a - b) et des données non sécurisées sont générées par le capteur sécurisé (14, 14a - b) et/ou par un capteur non sécurisé (16), l'expression « sécurisé » signifiant que des mesures de contrôle d'erreurs sont prises au sens d'une norme de sécurité pour la sécurité des machines et/ou pour les équipements de protection agissant sans contact physique, et l'expression « non sécurisé » signifiant le contraire indiquant que les exigences énoncées pour la protection contre les erreurs ne sont pas remplies,
**caractérisé en ce que**
le procédé traite en outre des données non sécurisées au moyen d'une unité d'évaluation non sécurisée (18), et une unité d'évaluation sécurisée (20) teste l'unité d'évaluation non sécurisée (18) en vérifiant un résultat d'évaluation du traitement des données non sécurisées sur la base des données sécurisées, et les données sécurisées ont une précision moindre et/ou sont disponibles moins fréquemment, par comparaison au résultat d'évaluation.
